(19) **Europäisches Patentamt**

**European Patent Office**

**Office européen des brevets**

(11) **EP 0 779 567 B1**

(12) **EUROPEAN PATENT SPECIFICATION**

(45) Date of publication and mention
of the grant of the patent:
**22.11.2000 Bulletin 2000/47**

(51) Int Cl.⁷: **G05B 19/418**, B21D 53/00

(21) Application number: **96309020.4**

(22) Date of filing: **11.12.1996**

(54) **Apparatus for manufacturing blinds**

Anlage zur Herstellung von Jalousien

Installation pour fabrication des jalousies

(84) Designated Contracting States:
**DE DK FR GB IT NL SE**

(30) Priority: **14.12.1995 EP 95203476**

(43) Date of publication of application:
**18.06.1997 Bulletin 1997/25**

(73) Proprietor: **HUNTER DOUGLAS INDUSTRIES B.V.**
**3071 EL Rotterdam (NL)**

(72) Inventors:
• **van Oostrom, Peter**
  **4001 MC Tiel (NL)**
• **Knikkenberg, Carl A.**
  **4311 NL Bruinisse (NL)**
• **Larsson, Reine**
  **471 73 Hjalteby (SE)**
• **Gawell, Peter**
  **444 92 Jorlanda (SE)**
• **Prins, John P.**
  **4681 BC Nieuw Vossemeer (NL)**
• **Steffen, Adri**
  **4698 RM oud Vossemeer (NL)**
• **Berntsson, Peter**
  **472 95 Varekil (SE)**

(74) Representative: **Allen, William Guy Fairfax et al**
**J.A. KEMP & CO.**
**14 South Square**
**Gray's Inn**
**London WC1R 5LX (GB)**

(56) References cited:
**GB-A- 2 274 521**          **US-A- 5 233 533**

**Description**

The invention underlying the present disclosure relates to a system for manufacturing blinds, said system comprising a processor unit, at least one manufacturing facility for cutting to length of an elongate material and a communication device for exchanging data between the processor unit and said at least one manufacturing facility.

US-A-3,498,167 discloses a numerically controlled machine for the punching and cutting of unspecified elongate profile members. Although such a machine could be adapted for use in the manufacture of blinds, this possibility is not disclosed. In the system of US-A-3,498,167, the processor unit is embodied by a control unit that is installed on a punch and shearing facility. The control unit controls the manufacturing facility in response to a program on a tape, whereby the control unit provides instructions to and receives information of parts of the manufacturing facility.

The invention has an object to provide a system for manufacturing blinds, which system efficiently and economically achieves manufacturing, whereby the manufacturing time and scrap are relatively low.

In accordance with the invention, as defined in claim 1, in the system for manufacturing blinds, the processor unit generates data for controlling the system taking into account an order portfolio and at least one parameter from said at least one manufacturing facility which parameter relates to a specification of the elongate material.

The invention is based on the view that control of the system after having regarded the other portfolio and at least one parameter from the manufacturing facility results in time and scrap reduced manufacturing. For example, when said parameter relates to a certain finish (e.g. colour) of blind material, taking into account the order portfolio provides basis for a manufacturing sequence of blinds of the same finish. When said parameter would relate to a standard length of raw material, taking into account the order portfolio provides basis for a manufacturing sequence using the standard length most economically. Said manufacturing facility may be for example a rail machine and there may be a further manufacturing facility such as a slat manufacturing and assembling machine whereby the manufacturing step will be self-explanatory.

Above-mentioned and other (more detailed) aspects of the invention are further described and illustrated with reference to the accompanying drawing, wherein

Figure 1 shows an embodiment of a general layout for a system for manufacturing blinds,
Figure 2 shows a schematic embodiment of a head rail fitting unit for use in a system for manufacturing blinds,
Figure 3 shows schematically a side view of the embodiment of the head rail fitting station of Figure 2,
Figure 4 shows a partial transverse section through the headrail fitting unit at the location of the measuring station according to the arrows IV-IV in Figure 2.
Figure 5A shows schematically a first position of a headrail with respect to the sensors of the measuring station according to the arrows V-V in Figure 4.
Figure 5B shows schematically in a similar view as Figure 5A a second position of a headrail with respect to the sensors of the measuring station;
Figure 5C shows schematically in a similar view as Figure 5A a third position of a headrail with respect to the sensors of the measuring station;
Figure 6 shows an example of a flow chart for the control of the headrail fitting unit of Figures 2 through 5C:
Figure 7 shows a schematic embodiment of a communication device for use with the system of Figure 1,
Figure 8 shows an example of a flow chart for a processor unit to sort and optimize an order portfolio, and
Figure 9 shows an example of a flow chart illustrating an optimization algorithm for ranking an order portfolio.

In the figures similar reference signs refer to corresponding parts of the system for manufacturing blinds.

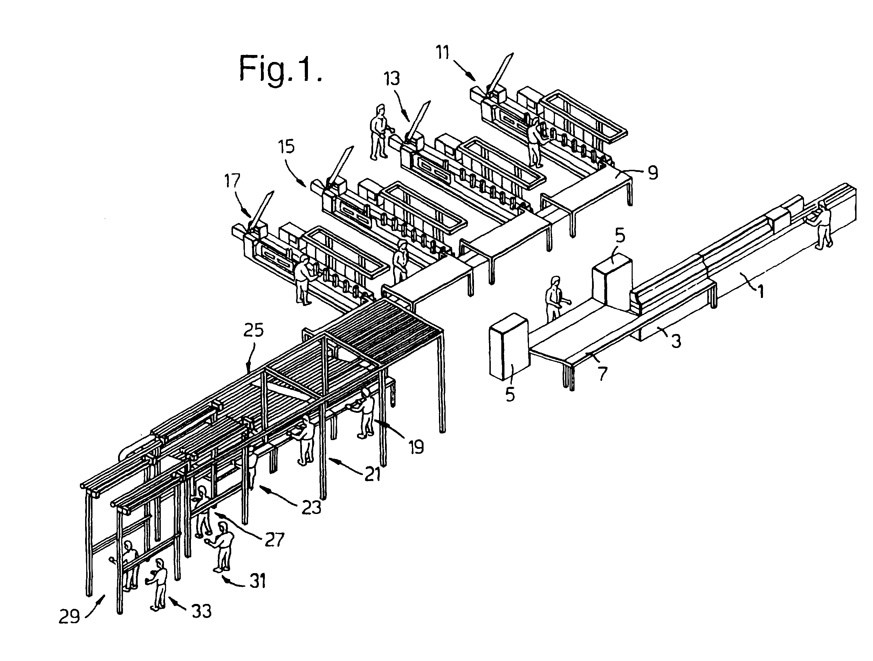

Figure 1 shows an embodiment of a general layout for a system for manufacturing blinds. Shown is a rail machine 1 for cutting to length elongate commercial lengths of sheet metal profiles for use in blinds. Such profiles are used for head and bottom rails and are usually prepared simultaneously by the rail machine. It is also common for such rail machine to cut to length longitudinal tilt shafts and to perform punching operations in the head and bottom rail for these to cooperate with later to be fitted hardware components. For a detailed description of such rail machine, reference is made to United States patent document US-A-3,043,178.

Within the present manufacturing environment it is advantageous for such rail machine to be numerically controlled. For a suitable type of numerical control reference is further made to United States patent document US-A-3,498,167. Aligned with the rail machine 1 is a head rail fitting unit 3. The head rail fitting unit 3 inserts required hardware components into the head rail.

A mechanical constitution of such head rail fitting unit is described in US-A-2,706,330.

Preferably again the operation of such head rail fitting unit is numerically controlled and means to achieve this are well known from the art.

The sequence and mode of operation of the headrail fitting unit 3 can conceivably be determined and controlled either by a processor unit or by the rail machine which precedes it. One particularly advantageous means for determining and controlling the operation of the headrail fitting unit 3 for use with the present invention will be described hereinafter. Further illustrated is a couple of string tape machines 5 which are positioned at either side of a receiving end of a conveyor 7, which conveyor is part of a transport facility. The conveyor 7 transports the head rail, which is semi-finished, the bottom rail and the tilt shaft for a single blind to the string tape machine 5. The elements which pertain to a single blind under construction are preferably placed in an individual container or tray.

Illustrated are two string tape machines 5, of which each may be adapted to a different type of string tape. If only one type of string tape is used or when the string tape machine can quickly change from one type to another type, then only one single string tape machine 5 will be required. A general construction of such a string tape machine is described in United States patent document US-A-4,145,797.

Then, after a required number of pre-finished string tapes have been added to the head rail and like parts of a blind under construction, all elements are put on a further conveyor 9, which is also part of the transport facility. The further conveyor 9 communicates with any one of four slat manufacturing and assembling machines 11, 13, 15 and 17. Again the number of the slat machines 11, 13, 15 and 17 is facultative and may be in ratio of their production capacity compared to the rail machine 1 or to the headrail fitting unit 3. Also, different slat machines may be preset to manufacture and assemble only slat material of a particular shape or dimension different from the other machine or machines. A concept of such slat machines is amply described in US-A-4,073,044.

Such slat machines may be further enhanced with automatic control as described in US-A-5,349,730 and in particular may be provided with an additional control feature such as described in US-A-5,022,296.

When a required number of slats has been manufactured and assembled in the string tapes (ladder cords), resulting in a bunch of slats, the raising and lowering cords are cut to length and put in position through aligned cord holes in the bunch of slats. Thereafter all blind elements are conveyed to any one of a number of assembly tables 19, 21, 23 for a manual assembly of the bunch of slats to the head rail. In the present embodiment, following this operation the blind head rail is attached to a carrier in an overhead conveyor 25, which conveyor is part of the transport facility.

The overhead conveyor is provided with a number of elongate carriers which can be transported longitudinally as well as transverse to their length.

A suitable overhead conveyor device is described in the international patent application document WO 95/25656.

The overhead conveyor takes the partly finished blind to a first end assembly station 27 in which tape spacers, end caps and the bottom rail are inserted. Further finishing takes place at a second finishing station 29, where the string tapes and lift cords are attached to the bottom rail. In a third station 31 the blind operating elements such as a tassel and a tilt wand are attached. Then final inspection and detail finishing is accomplished in a fourth and last station 33 from which the finished blind is ready for despatch.

The routing of the blinds through the four end assembly stations 27, 29, 31 and 33 is by alternate longitudinal and transverse movement of the carrier of the overhead conveyor. This allows for a minimal demand on floor space in an assembly plant. The four final assembly stations are generally identical in structure and allow the blind to be hung at an adjustable height. This enables the blinds to be fully deployed or with the blind raised sufficiently to lower the head rail within reach of an operating person to allow finishing. A detailed description of such an assembly station can be found in US-A-2,489,467.

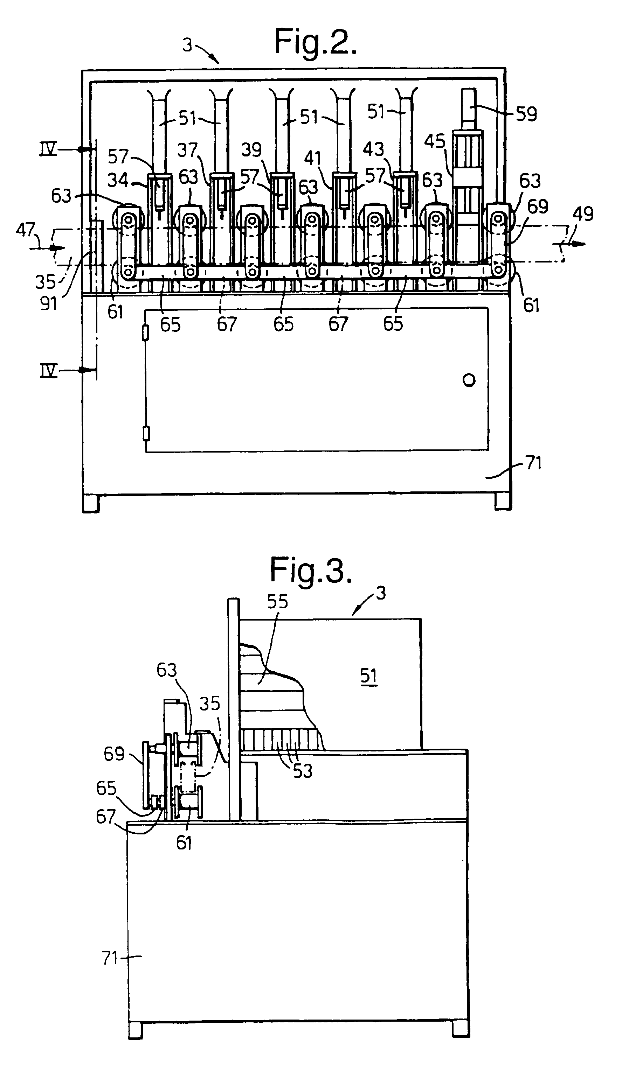

Figure 2 schematically shows an embodiment of a head rail fitting unit 3 for use in a system for manufacturing blinds in accordance with the invention. The head rail fitting unit 3 is shown looking towards the stations effecting the insertion of hardware.

A first inserting station 34 is adapted to insert a single tilter gearing in either a right hand or a left hand end of a head rail 35 shown in dash dotted lines. A second inserting station 37 is adapted to insert a single cord lock destined to be fitted in a left hand end of the head rail. A third inserting station 39 does the same with a cord lock destined to be fitted in a right hand end of the head rail.

Two further inserting stations 41 and 43 are provided to deal with hardware combinations in which cord lock and tilter gearing are combined at either the left hand or the right hand end of a head rail.

A final inserting station 45 deals with the tilt roll supports. This station differs somewhat from the other stations and operates several times and at least two times on each head rail; the previous stations are only to operate once per head rail.

The in-feed direction of the head rail 35 is indicated by arrow 47 and the out-feed direction by arrow 49. The head rail 35 can be directly fed from the rail machine 1 and the machines 1 and 3 can be directly coupled together as shown in Figure 1. Moreover the machine control for head rail positioning and tool station operation can be centralized into one unit. Figure 2 further shows that each station is provided with a magazine 51 for holding a supply of hardware components.

Figure 3 shows a schematic side view of one embodiment of the head rail fitting station of Figure 2. Hardware components 53, which could be anything ranging from tilters to tilter cord lock combinations depending on the particular station mentioned above, are contained in tubular supply containers 55 as shown in the cut-out portion of magazine 51 in Figure 3.

**EP 0 779 567 B1**

With reference to Figure 2 it is further mentioned that each station is also provided with an actuator 57 or 59 which conveniently is in the form of a pneumatic cylinder positioned for a downward stroke. The head rail 35 is supported and positioned in the machine by a plurality of lower drive rollers 61 and upper drive rollers 63. All rollers 61 and 63 are driven through an array of horizontally positioned drive belts or chains 65 or 67 and vertically positioned drive belts 69. The position of the head rail in the fitting unit is controlled by an electronic eye, which preferably is positioned adjacent the in-feed end of the headrail fitting unit.

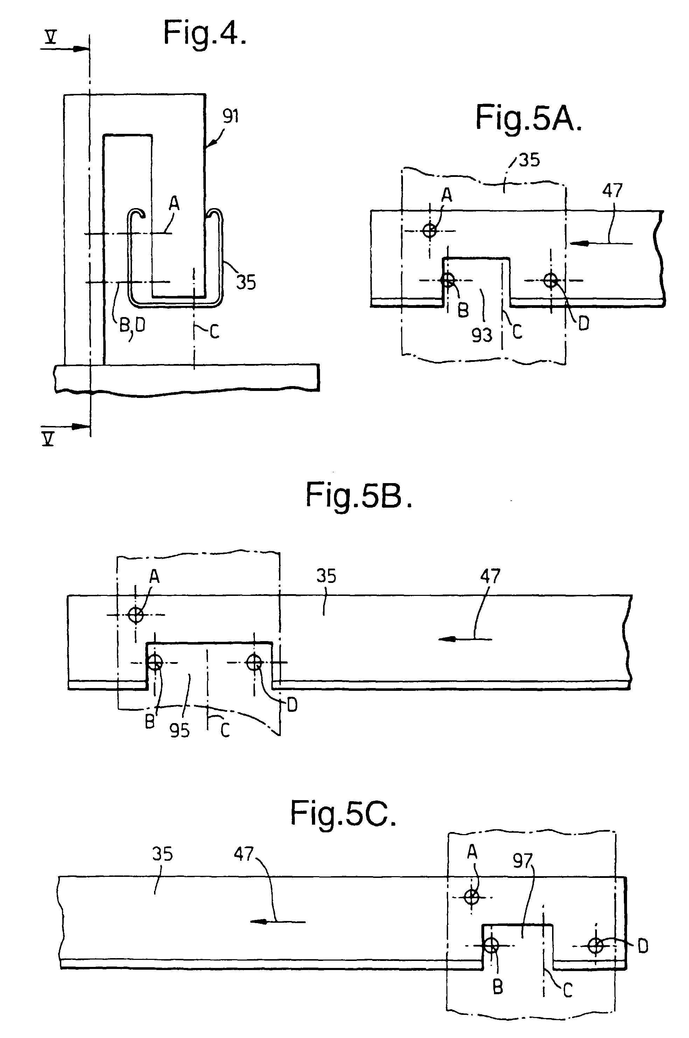

Figures 2 and 4 show a measuring station 91 as used in the headrail fitting unit, which measuring station comprises a number of electronic eye type sensors.

The measuring station 91 is provided with sensors A, B, C and D, which each have a predefined position transverse of the headrail 35 as indicated by respective dash-dotted centre lines in Figure 4.

Figure 5A shows a schematic side elevation through the measuring station of Figure 4 in the direction of the arrows V-V and serves to illustrate the longitudinal position of sensors A,B,C and D with respect to the head rail 35. As shown in Figure 5A the leading end which is also the left hand end of the headrail 35, is fed in the direction of arrow 47 and is provided with an aperture 93 for receiving either a tilter gearing or a left hand cord lock. The headrail in Figure 5A is shown in the position where sensor A has detected the presence of a headrail and where sensor B is in the process of detecting the aperture 93. The sensor C, which in Figures 4 through 5C is only indicated by its centre line, is positioned to detect a bottom opening in the headrail for the passing of ladder cords and lift cords and thereby detects the positions for inserting the tilt roll supports.

Such bottom openings are well understood by the man skilled in the art and do not need any further description. It is however important to note that sensor C is positioned remote from any tilter or cord lock openings such as 93 so as to detect only bottom openings in the headrail.

Figure 5B shows a left hand leading end of another form of headrail 35 which has a larger opening 95 for the insertion of a combined left hand cord lock and tilter gearing. With such a headrail all the blind controls will be on the left hand side and the right hand end of such a headrail will not have any control openings.

Alternatively a combined right hand cord lock and tilter if specified results in a plain leading left hand end and an enlarged opening such as 95 in the trailing right hand end of a headrail.

Shown in Figure 5B is the detection by sensor B of the larger opening for the combined blind operating controls.

Figure 5C shows the trailing end of the headrail of Figure 5A in front of the sensors A, B, and D.

It may further be seen from Figure 5C that sensor A which detects the presence of headrail 35 is the last sensor to be uncovered upon continued movement of the headrail in the direction of arrow 47. Hence the sensor C might misinterpret the end of the headrail for another bottom opening. The machine control hereinafter described will effectively avoid any such misinterpretations.

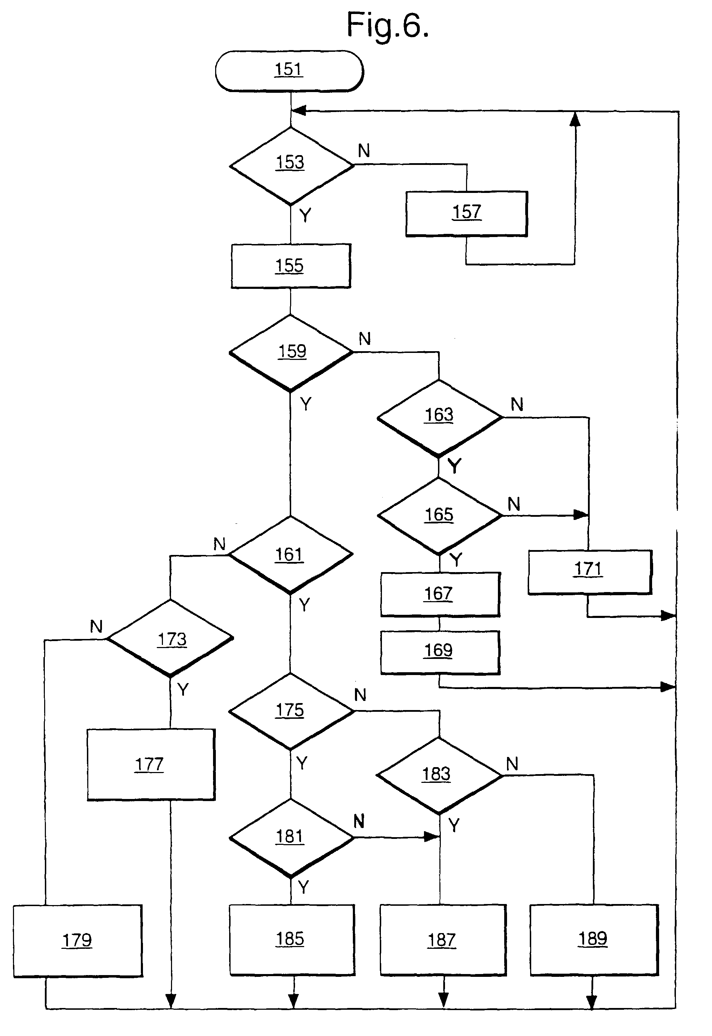

Figure 6 shows an example of a flow chart for the control of the headrail fitting unit of Figures 2 through 5C. A flow chart legend is given in Table 1 at the end of the description.

At step 151 the headrail fitting unit is started. The fitting unit may be in the start position before being switched on and this may also be the case after finishing a previous run or subsequent to interruption in a previous task as a result of malfunction.

At this stage several counters which record the advance of the headrail through the fitting unit or the sequence of operations will have been reset.

At step 153 the unit through sensor A will determine whether or not there is a headrail present. If no headrail is present or if a headrail has ceased to be in detectable position then a feed counter which continuously records the length of headrail passing through the fitting unit is reset to zero. As soon as a headrail is detected at step 153 the headrail feed counter is started at step 155 and is maintained active as long as the signal from sensor A does not change.

At step 159 it is determined whether sensor B detects a control opening in the headrail for the insertion of a cord lock and/or a tilter. Subject to the requirements of the control circuit the signal from sensor B may be inverted. If step 159 has detected a control opening in the headrail then step 161 determines whether sensor D has detected a large or a small control opening.

The process however proceeds to step 163 if no control opening is detected in step 159. In step 163 it is determined whether sensor C detects a bottom rail opening. For the same reason as sensor B sensor C may be arranged to give an inverted signal. If no bottom rail opening is detected the support counter is reset to zero and the process returns to step 153.

Step 163 is passed before or after detection of a control opening for as long as step 153 detects the presence of a headrail.

If step 163 has detected a bottom rail opening step 165 checks whether this is not a misinterpretation of the trailing end of the headrail by reading sensor D. As mentioned hereinabove in case of left hand combined tilt and lift control the trailing end of the headrail has no control opening to enable the detection of the trailing headrail end.

The check of step 165 may alternatively be replaced by a suitable input value which determines either the length of the particular headrail or the total number of supports to be inserted.

4

In the presently described control as many as possible parameters are detected from the headrail proper so as to reduce as much as possible discrepancies between input and actual product resulting in error signals and machine interruptions.

If the bottom opening detected by step 163 is found to be valid by step 165 then the process counts a first support at step 167 and subsequently calculates and sets the feed counter value at which the support inserting station 45 will operate for a first time. After step 169 the process returns to step 153 and steps 167 and 169 are passed a subsequent number of times corresponding to the number of supports of the headrail. Each blind headrail will at least have two such supports and may have up to any number in excess thereof depending on the length of the headrail. As there is usually a practical limit to the length of the headrail the number of supports will usually not exceed five. As soon as step 165 detects an end of headrail situation the process is deflected to step 171 to reset the support counter and to return to step 153. If in step 159 the sensor B has detected a control opening the sensor D in step 161 may detect a large control opening for a combined tilter and cord lock. If the control opening is determined by step 161 to be a large one, step 173 determines whether the opening has been detected in the left hand or right hand end of the headrail.

The step 173 may compare the current headrail feed counter value against a predefined threshold value. Alternatively also input may be obtained from the rail-cutting machine 1, from a central database or from a bar-code label.

If step 173 has determined a left hand control opening then step 177 calculates and sets the headrail feed counter value at which to operate the inserting station 41 for the combined left hand tilter and cord lock. Otherwise if step 173 has determined a right hand combined control opening then step 179 calculates and sets the feed counter value at which to operate inserting station 43 for the combined right hand tilter and cord lock.

At step 161 the remaining possibility is that a small control opening is detected for the insertion of either a single tilter unit or a single cord lock unit. In that case the process proceeds to step 175 which determines whether a left hand cord lock has been specified. In the present embodiment it is preferred to use identical control openings for either a tilter, a left hand cord lock or a right hand cord lock. This reduces the requirement of punch tools in the headrail cutting and punching machine 1 and also results in a more balanced appearance of the blind headrail. The downside of such an arrangement is that the headrail fitting unit cannot recognize whether a cord lock or a tilter is intended in the first detected single control opening 93. In the present example the information as to whether a left hand cord lock is specified is received as input from either the previous rail cutting and punching machine 1 or from the common processor unit.

If a left hand cord lock is found to be specified at step 175 then step 181 analyses whether the control opening 93 or 97 was detected at the left hand or right hand side of the headrail 35. Step 181 compares the feed counter reading to the predefined threshold value. If at step 175 it is determined that the cord lock for the single opening should be a right hand one then step 183 determines whether the tilter or the right hand cord lock opening is detected. if the threshold comparison at step 181 determines that although a left hand tilter is specified it has detected a right-hand opening the process proceeds to step 187. Step 187 calculates and sets the headrail feed counter value at which the single tilter inserting station 34 is to be operated.

Similarly if step 183 has determined that a left hand opening has been detected in a headrail for a right hand cord lock the process also proceeds to step 187.

For the insertion of a left hand cord lock step 181 proceeds to step 185 which calculates and sets the feed counter value at which to operate the left hand cord lock inserting station 37.

For the insertion of a right hand cord lock step 183 proceeds to step 189 which calculates and sets the feed counter value at which to operate the right hand cord lock inserting station 39. After setting the values of either step 177, step 179, step 185, step 187 or step 189 the fitting unit control returns to step 153.

Additional control for the actuation of the inserting stations and the supply of magazines 51 may be of any conventional type. The operation of the inserting stations may further involve conventional pneumatic and electric components.

A majority of the electrical and pneumatic components for the machine operation can be suitably housed in a cabinet 71 in the base of the head rail fitting unit 3.

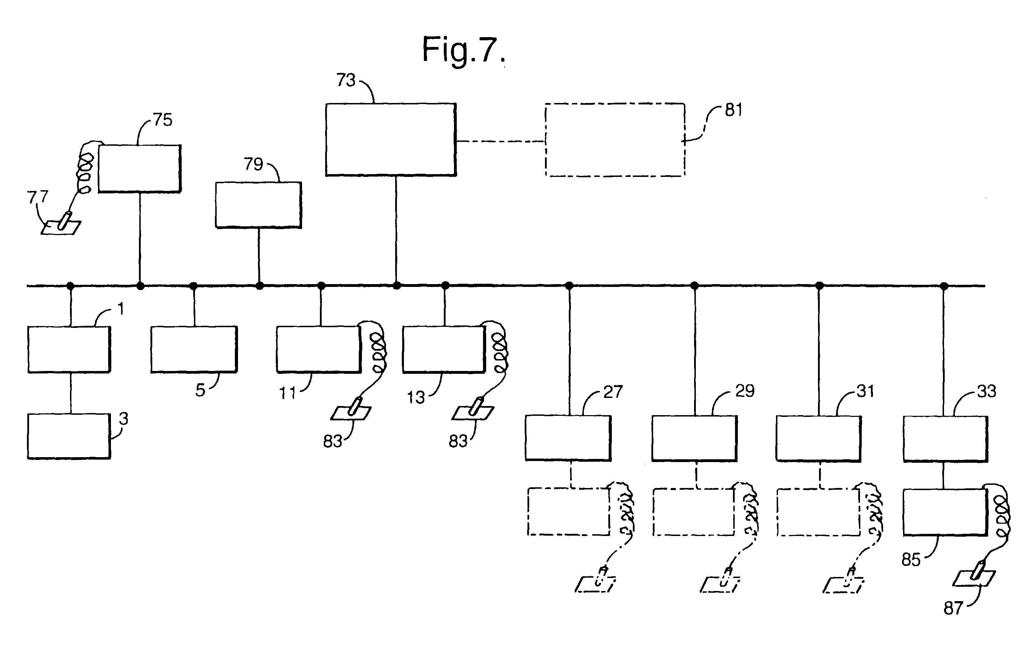

Figure 7 shows a schematic embodiment of a communication device for use with the system of Figure 1. A processor unit 73, which suitably can be in the form of a commercially available personal computer is connected through the communication device, hereinafter referred as a network, with a number of individual manufacturing facilities. In the present embodiment the processor unit is coupled to an additional operator panel 75, which may be equipped with a data reader 77 shown in the form of a bar code reader pen. Another suitable data reader could be in the form of a scanner. The additional operator panel 75 could be required if control over the system is necessary from a location remote from where the processor unit 73 is located.

Further facilities may include a printer 79 and an (optional) external connection 81 by means of a modem connection. The external connection may provide direct access for clients, who for example can directly add any order to an order portfolio in the processor unit.

The printer 79 in the present embodiment is a bar-code printer for printing data carriers, such as stickers. Stickers issued from the printer 79 could be attached to a blind under construction for subsequent recognition or subsequent parameter retrieval. Any sticker is accordingly provided with a unique identification code.

The network further establishes communication with the rail machine 1, at least one string tape preparation machine 5, preferably two or more slat manufacturing and assembly machines 11 and 13, and any suitable number of end assembly stations 27, 29, 31 and 33.

The head rail fitting unit 3 in the described embodiment communicates via the rail machine 1. If the head rail fitting unit 3 were to operate in a stand-alone environment then it could have its own communication device or channel to the network to obtain the necessary input about the position and type of cord lock.

The slat manufacturing and assembly machines 11 and 13 are each provided with a data input device which is illustrated in the form of a bar code reader 83. Since a blind under construction may during manufacturing be appointed to one of a number of identical production units the processor unit should be kept informed of the whereabouts of any particular blind under construction. In the present embodiment this is achieved by means of the bar-code stickers, but also automatic tracking techniques could be employed.

Once such a blind arrives at one of the slat manufacturing and assembly machines 11 or 13, this can be reported by scanning the unique identification code from the bar-code sticker attached to the head rail. Although upon receipt of this information by the processor unit 73 this in turn will provide the required parameters for further production while adjusting a status report on the order in question and its location.

If at least two slat machines are provided also a physical separation may be practical in that one machine produces exclusively bunches of 16mm width slats and the other only those of 25mm wide. The routing of blind orders will then be predefined.

Similar options are available if several string tape machines 5 are employed.

Four end assembly stations 27, 29 31 and 33 are shown which in the described embodiment are physically separated by carrying out different functions. Because a blind under construction then progresses sequentially from one station to the next one, only the last station 33 needs to be equipped with an operator panel 85 which again can be provided with or in the form of a bar-code reader 87.

It is also possible that a blind under construction progressing towards the end assembly stations is redirected to a single one of these stations. In such a layout each end assembly station 27, 29,31 or 33 is adapted to finish the end assembly completely and hence each of these stations then must be equipped with an operator input device as is shown in dash-dotted lines in Figure 7.

An individual blind order is comprised of at least the following information:

a) type of the blind, i.e. whether 16mm or 25mm width slats are specified;
b) finish of the slat material; this can be a choice of up to hundred or more colours, perforated slats, patterned slats or edge contoured slats;
c) position of the blind controls, left and right or combined only left or only right; and
d) width and height of the finished blind or the dimensions of the area to be covered thereby.

These are only the most prominent parameters and even a few more may be encountered in blind orders. One example of an additional parameter is the specification of side guiding which requires additional cut-outs to be made to the head rail, bottom rail and slats. Side guiding in blinds when regularly specified may require an additional end assembly station to improve efficiency.

The above cited parameters cannot be used directly by the individual manufacturing units.

Height and width dimensions before being translated into the length and number of slats or the length of head and bottom profiles require suitable adaptation for adequate clearance. Also the maximum area of the blind is subject to certain restrictions and also governs the number of string tapes, lift cords and hardware components to be used.

The choice of slats largely exceeds the available finishes of head and bottom rail stock and also the colour range of cording. Hence a number of different slats finishes is combined with the same matching head and bottom rail finishes. The available shades of cording such as string tapes and lift cords are usually even fewer than those of the head rails. These variable parameters are manufacturer specified and accord with predefined rules, which should be incorporated in the processor unit. After appropriate processing of the customer orders each individual manufacturing unit is preferably fed with only those parameters necessary for its operation.

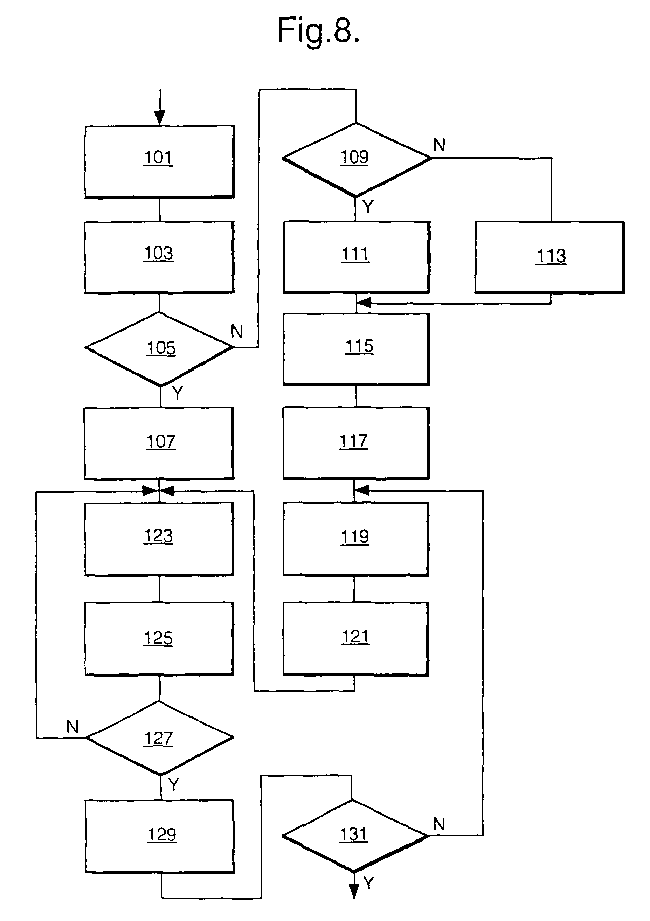

Figure 8 shows an example of a flow chart for a processor unit to sort and optimize an order portfolio. A flow chart legend is given in Table 2 at the end of this description. Orders for blinds are stored in a database part of the processor unit and represent an order portfolio. The order portfolio may optionally be sorted, for example according to date, priority index (if present), and slat finish. This being indicated as step 101 in Figure 8. In the present example the priority index ranges from "0" (zero) to "2" (two), whereby the latter represents the highest priority. Slat finishes can comprise different colours, printed slat surfaces, embossed, perforated or otherwise patterned slats as well as edge contoured slats from a choice of different edge contours.

The described embodiment starts with manufacturing of the head and bottom rails of a blind under construction, which manufacturing is executed by the rail machine. However, it is emphasized that production could equally well start with the manufacture of the required slats.

As said, with the described choice of slat finishes it is not usual to offer a similar large selection of head rail finishes. Hence it suffices that there is available a matching head and bottom rail finish which blends well with a number of slat options. In the present embodiment therefore several individual slat finishes are grouped and attributed to a smaller number of available head and bottom rail finishes. This step can be contained in step 103.

The system then determines in step 105 and step 109 whether a priority index other then "0" should be attributed to the order. Since it may be desirable of attributing priority indexes while putting in orders, the system should only be enabled to adjust existing priority indexes to a higher value only. Orders older than a first period of (by way of example) one to several days as predefined in the system will automatically be increased to a priority value of "1" (step 11). Orders older than a predefined second period of (by way of example) several days to one week will be increased to a priority index of "2" (step 107). The value "0" will be retained if no particular priority is indicated (step 113). A priority index of "1" results in that the order is executed immediately after the current finish. Also the order with priority index "1" will possibly be executed first amongst other orders of the same finish. When there are several orders with a priority index of "1", but of different finishes, then all these priority "1" index finishes are planned before any other finish. For the sequence of several finishes with the priority "1" one may simply choose the sequence of the finish reference number or the sequence of receipt or acceptance. A production order having a priority index of "2" will be executed immediately next, irrespective of head rail length or finish. In case there are several priority "2" type orders, these will be dealt with strictly in their order of acceptance. For the priority "1" and "0" the manufacturing sequence is optimized within a particular finish to reduce as much as possible the amount of scrap. The scrap problem is particularly apparent in the production of head and bottom rails which are formed from fixed commercial lengths of profiles measuring five to six meters in length. Uncut remaining lengths of less than about one metre are more often than not scrapped because their number easily exceeds the number of head rails required in this small size. Since head and bottom rail profiles are preshaped and prepainted, any scrap represents a substantial capital loss. For transportation purposes the commercial length has to be reduced to five or six metres whereas the economical manufacture of these profiles is confined to large volume factories which therefore need to distribute these profiles to several blind manufacturing workshops.

For optimization the system determines in step 115 the matching head rail finish and individual lengths of head and bottom rail for the available order portfolio. The system then in step 117 sorts the required head rail lengths according to priority index, finish and length. The next step 119 is to select the head rail, finish that is next in turn for production and to optimize combinations of individually required head rail lengths. This step also takes into account the usual or average cutting loss. Parameters such as commercial length, remaining uncut or partially cut lengths and cutting loss can be predefined in a data memory of the processor unit. In step 121 the production sequence for the particular finish is determined from the optimum combination found in step 119. The problem to be solved by optimization, an example of an optimization algorithm will be described hereafter, can also be represented as a traveller who is allowed only to take as luggage along a total weight of goods. If the goods to be selected from, exceed the maximum allowed weight and each have different weights and values, the traveller will like to carry with him the largest possible value in goods. A suitable algorithm for such a problem can be a back-tracking algorithm of the so-called "knapsack" or "branch and bound" type. A similar algorithm can be used for the optimization in step 119, in which the maximum weight restriction would be represented by the available length of profile. The individual head rail lengths to be cut from the profile length would thereby be represented as the goods to be selected from. The "value" and "weight" of these lengths of head rail are identical in that the possible greatest length of head rail to be cut results in lesser scrap, but at the same time can never exceed the available length of profile while also allowing for cutting losses.

Using the algorithm in this manner ensures that the available length of profile is used to the fullest possible extend while reducing scrap as much as possible.

The system following optimization for the next in turn finish of head rail selects in step 123 the uncut length of profile to be started from and starts production of the first head rail, bottom rail and tilt rod. This is accomplished by the rail machine 1 and fitting unit 3, which have been described in connection with Figures 1 through 6.

Prior to and following each individual manufacturing step there may be communication which the processor unit, either to obtain parameters for production and/or to update and amend the order status of a blind under construction. This activity is illustrated as step 125 in Figure 8.

If the order is determined in step 127 not to be the last one for the current finish, then steps 123 and 125 are repeated.

After the last order for the current finish has been completed there is an optional step to enable input of remaining uncut lengths of profile or any partial commercial lengths of profile for use in a future optimization for these remnants. This information can than be incorporated in the same finish.

If further finishes have to be run following the just completed finish, then the process is continued from step 119.

After all orders for all finishes have been completed, the head and bottom rail manufacture will be interrupted until a new order portfolio is available.
Further finishing of a blinds under construction may then be still under way at the slat machines or finishing stations.
Reduction to practise has required that certain adaptations be made to the adopted algorithm. The number of commercial lengths of profile required for a number of blinds using the same finish is often more than one. Also the predefined priority index interferes with the ideal optimization criteria. For this reason it has been found that the following adaptations give improved results.

A) All blinds that have a head rail length in excess of half a commercial length of profile will require a fresh commercial length. For this reason the blind orders that include head rail lengths in this category are given an increased value index, which could simply be a double value. This substantially reduces calculation time of the algorithm, because part of the optimal solution can already be arrived at much earlier during the optimization calculations.
B) Ideally the smaller lengths of head rail should be distributed over a possibly large number of successive commercial lengths. This enhances the available options of cutting each commercial length of profile with as little scrap as possible. Since the algorithm concentrates on a single commercial length at the time it may reduce the amount of scrap in one commercial length at the cost of increased scrap in subsequent commercial lengths. This problem has been countered by setting a further condition by a maximum number of blind head rails that may be cut from a single commercial length.
The maximum number of blinds to be cut from each commercial length of head rail is restricted by the following calculation:

$$n_{max} = \frac{n \times L}{\Sigma \, l_n}$$

wherein:

$n_{max}$ = maximum number of blinds per commercial length of profile,
$n$ = number of blinds per finish (this can be prefixed between ten and hundred for efficiency reasons discussed below),
$l_n$ = individual head rail lengths, and
$L$ = commercial length of profile (usually five to six meter).

The value of $n_{max}$ is to be adjusted to the next higher or lower integer value. A result of $n_{max} = 2,5$ blinds would typically result in either 2 or 3 blinds per commercial length or profile. This can be predefined to be only one of these values, but checking either of the adjacent values is also possible.
C) It has also been found that the number of blind orders of one finish to be optimized can result in a significant increase of the optimization calculation time. A point where the calculation time increases unduly without any noticeable further reduction in scrap will be reached between 10 and 100 blind orders in a single optimization step. Relief has been found in treating a large number of orders for a single finish effectively as two or more different finishes.
The added calculation times of such subsequent optimizations are still less than the large single optimization with essentially the same result in scrap reduction. The limiting number for division of single finish orders can be set as a predefined parameter. Good results have been obtained with a break-even point of 30 blind orders.
D) A priority index "1" order is dealt with by increasing the value index thereof. Analogous to paragraph A) a doubling of the value index could be chosen.
E) The priority index "2" orders are excluded from the optimization and are only subject to a sorting action within the order portfolio.

If partial commercial lengths of profile have been memorized from previous production runs, then these remnants are used in preference of fresh commercial lengths.

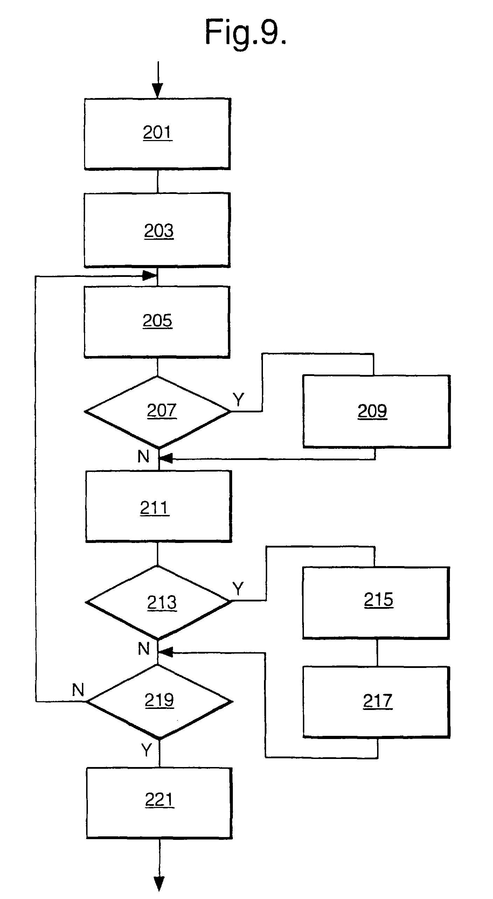

Figure 9 shows an example of a flow chart illustrating an optimization algorithm for ranking an order portfolio. A flow chart legend is given in Table 3 at the end of this description. The present chart represents a more elaborate version of the steps 119 and 121 of Figure 8.
The system starts in step 201 with the selection of a next in turn finish of head and bottom rail production. Apart from the length of the head rail a value index has been created to give increased value to blinds that have a higher priority or a length that exceeds more than half of a fresh commercial length. This has been explained under paragraphs A) and D) above. The values are totalled during the optimization, but are reset to zero in step 203 at the beginning of an optimization for every new finish. In step 205 a possible combination is generated. Following step 207, which determines whether or not the value index should be increased, the value index is adjusted in step 209 if necessary.

Now, the total value of the generated combination is calculated in step 211.

In step 213 the calculated value is compared with the set value, which is zero at the beginning. If a higher value is obtained this is saved in step 217 together with the combination from which it results. Any previously saved lower value and (inferior) combination is thereby deleted.

The above process is repeated until the final generated combination is determined in step 219. The combination resulting in the highest value having been saved now allows step 221 to determine the production sequence, pertaining to this optimum. The further control is again as described in connection with Figure 8 (step 123) and the flow chart of Figure 9 is resumed once step 131 has determined that there are further orders in the portfolio.

Thus is described a system and procedure for the manufacturing of venetian blinds made to customers specification.

A common control device communicates with several automatic facilities that carry out individual stages of the blinds assembling.

Data is communicated and exchanged between the common control device and the individual manufacturing facilities, such as rail machines, assembly units, slat machines and finishing stations.

Manufacturing thereby can be carried out more efficiently resulting in a more economical use of rail and slat stock. Use of rail stock in particular is optimized in view of colours and sizes with only reduced and controlled possibilities for interference in the optimum production sequence. Controlled interaction between the subsequent manufacturing facilities has thereby resulted in a significant reduction in time and scrap.

Table 1:

| Figure 6 legend | |
| --- | --- |
| **Step** | **Description** |
| 151 | Start |
| 153 | Sensor A = 1? |
| 155 | Start and continue feed counter |
| 157 | Reset feed counter |
| 159 | Sensor B = 1? |
| 161 | Sensor D = 1? |
| 163 | Sensor C = 1? |
| 165 | Sensor D = 1? |
| 167 | N = N + 1 |
| 169 | Calculate and set feed counter value for $(N+1)^{th}$ operation of support inserting station (45) |
| 171 | Reset N = 0 |
| 173 | Feed counter value below predefined threshold value? |
| 175 | Cord lock in left hand position? |
| 177 | Calculate and set feed counter value for operation of left hand combined cord lock tilter inserting station (41) |
| 179 | Calculate and set feed counter value for operation of right hand combined cord lock tilter inserting station (43) |
| 181 | Feed counter value below predefined threshold value? |
| 183 | Feed counter value below predefined threshold value? |
| 185 | Calculate and set feed counter value for operation of left hand cord lock inserting station (37) |
| 187 | Calculate and set feed counter value for operation of tilter inserting station (34) |
| 189 | Calculate and set feed counter value for operation of right hand cord lock inserting station (39) |

Table 2:

| Figure 8 legend | |
| --- | --- |
| **Step** | **Description** |
| 101 | Sort orders according to their date and slat finish (colour, contour, pattern, shape, etc.); this step is optional. |
| 103 | Read available orders from database file. |
| 105 | Order date more than one week old. |

Table 2:   (continued)

| Figure 8 legend | |
|---|---|
| **Step** | **Description** |
| 107 | Set priority index to "2". |
| 109 | Order date more than one day old. |
| 111 | Set priority index to "1". |
| 113 | Set priority index to "0". |
| 115 | Determine head rail finish matching the specified slat finish. |
| 117 | Sort according to priority index and according to matching head rail finish. |
| 119 | Select next in turn head rail finish for production, and optimize combinations of individually required head rail lengths against available uncut profile lengths. |
| 121 | Determine production sequence from optimum combination. |
| 123 | Select uncut profile length and start production of next in turn order for current finish. |
| 125 | Communicate with database file, execute production step and update database file with an amended status of the order. |
| 127 | Last order for current finish. |
| 129 | Input of remaining uncut profile lengths of the just completed finish for future retrieval; this step is optional. |
| 131 | Last order for all finishes of order portfolio. |

Table 3:

| Figure 9 legend | |
|---|---|
| **Step** | **Description** |
| 201 | Select next in turn finish for production. |
| 203 | Set total value to zero. |
| 205 | Generate a possible combination of required head rail lengths and available uncut lengths of profile. |
| 207 | Length of head rail is longer than half the length of the uncut profile or priority index is "1". |
| 209 | Increase the value index associated with this particular length of head rail. |
| 211 | Calculate total value of the generated combination. |
| 213 | Calculated total value is larger than the set total value. |
| 215 | Delete the set value and if applicable, delete any saved combination. |
| 217 | Set the total value to the newly calculated higher amount and save the superior combination of individual lengths associated therewith. |
| 219 | Last possible combination within the selected finish. |
| 221 | Determine sequence of production from lastly saved combination which represents the optimum combination. |

**Claims**

1.  A system for manufacturing blinds, said system comprising a processor unit (73), at least a manufacturing facility (1) for cutting to length of an elongate material, and a communication device for exchanging data between the processor unit (73) and said at least one manufacturing facility (1), wherein the processor unit (73) generates data for controlling the manufacturing facility (1) taking into account an order portfolio and at least one parameter from said at least one manufacturing facility which parameter relates to a specification of the elongate material.

2.  A system according to claim 1, wherein the processor unit (73) is adapted to sort the order portfolio.

3.  A system according to claim 1 or 2, wherein the processor unit (73) is adapted to optimise the sequence of the order portfolio.

4.  A system according to claim 3, wherein the processor unit (73) is adapted to sort individual orders for blinds from the order portfolio subject to dimension and finish of said orders, while optimising the same by ranking in accordance with said at least one parameter.

5. A system according to any one of the preceding claims, wherein the processor unit (73) is adapted to generate unique identification codes relating to orders for blinds in the order portfolio.

6. A system according to claim 5, wherein said at least one manufacturing facility (1) comprises means (79) for conveying each unique identification code to a data carrier associated with a particular blind under construction by said at least one manufacturing facility.

7. A system according to any one of the preceding claims, wherein said specification comprises at least one of those relating to colour and length of said elongate material.

8. A system according to any one of the preceding claims, wherein the elongate material comprises a rail profile.

9. A system according to any one of the preceding claims, wherein said at least one manufacturing facility is a head rail machine (1).

10. A system according to any one of the preceding claims, wherein the system further comprises a transport facility (7, 9, 25).

11. A system according to claim 10, wherein the transport facility comprises a conveyor (25), which is provided with a number of carriers being longitudinally as well as transverse transportable.

12. A system according to any one of the preceding claims, wherein the system further comprises at least one further manufacturing facility (3, 11, 13, 15, 17) for carrying out an additional manufacturing step, said at least one further manufacturing facility (3, 11, 13, 15, 17) being coupled to the processor unit (73) by the communication device.

13. A system according to claim 12, wherein the processor unit (73) is adapted to take into account at least one further parameter from said at least one further manufacturing facility (3, 11, 13, 15, 17).

14. A system according to claim 12 or 13, wherein said data generated by the processor unit (73) is capable of controlling said at least one further manufacturing facility (3, 11, 13, 15, 17).

15. A system according to any one of claims 12 to 14, wherein said at least one further manufacturing facility is a headrail fitting unit (3).

16. A system according to any one of claims 12 to 14, wherein said at least one further manufacturing facility is a slat manufacturing and assembling machine (11, 13, 15, 17).

17. A system according to any one of the preceding claims, wherein said at least one parameter also contains status information about a particular blind product under construction.

18. A system according to any one of the preceding claims, wherein said at least one parameter also contains identification information about said at least one manufacturing facility.

19. A system according to any one of the preceding claims, wherein said at least one parameter also contains status information about said at least one manufacturing facility.

20. A system according to any one of the preceding claims, wherein the communication device comprises a communication channel.

21. A system according to any one of the preceding claims, wherein the communication device comprises a human interface (75).

22. A system according to any one of the preceding claims, wherein the communication device comprises a bar code reader (77).

23. A system according to any one of the preceding claims, wherein the communication device comprises a bar code printer (79).

**Patentansprüche**

1.  System zur Fertigung von Jalousien, wobei dieses System eine Prozessoreinheit (73), zumindest eine Fertigungsanlage (1) zum Zuschneiden der Länge eines länglichen Materials und eine Kommunikationsvorrichtung zum Datenaustausch zwischen der Prozessoreinheit (73) und der zumindest einen Fertigungsanlage (1) umfaßt, wobei die Prozessoreinheit (73) Daten erstellt, um die Fertigungsanlage (1) zu steuern, unter Berücksichtigung eines Auftragsprotefeuilles und zumindest eines Parameters der zumindest einen Fertigungsanlage, wobei sich der Parameter auf eine Spezifizierung des länglichen Materials bezieht.

2.  System nach Anspruch 1, wobei die Prozessoreinheit (73) geeignet ist, das Auftragsportefeuille zu sortieren.

3.  System nach Anspruch 1 oder 2, wobei die Prozessoreinheit (73) geeignet ist, die Abfolge des Auftragsportefeuilles zu optimieren.

4.  System nach Anspruch 3, wobei die Prozessoreinheit (73) geeignet ist, einzelne Aufträge für Jalousien vom Auftragsportefeuille zu sortieren, welches der Abmessung und Endbearbeitung dieser Aufträge unterworfen ist, während dasselbe durch Ranking gemäß dem zumindest einem Parameter optimiert wird.

5.  System nach jedem der vorhergehenden Ansprüche, wobei die Prozessoreinheit (73) geeignet ist, einzigartige Identifikationscodes zu erstellen, welche sich auf Aufträge für Jalousien im Auftragsportefeuille beziehen.

6.  System nach Anspruch 5, wobei die zumindest eine Fertigungsanlage (1) Mittel (79) umfaßt, um jeden einzigartigen Identifikationscode zu einem Datenträger zu befördern, welcher mit einer einzelnen, im Bau befindlichen Jalousie durch die zumindest eine Fertigungsanlage in Verbindung steht.

7.  System nach jedem der vorhergehenden Ansprüche, wobei die Spezifizierung zumindest eine von jenen umfaßt, welche sich auf die Farbe und Länge des länglichen Materials beziehen.

8.  System nach jedem der vorhergehenden Ansprüche, wobei das längliche Material eine Kopfleiste umfaßt.

9.  System nach jedem der vorhergehenden Ansprüche, wobei die zumindest eine Fertigungsanlage eine Kopfleistenmaschine (1) ist.

10. System nach jedem der vorhergehenden Ansprüche, wobei das System des weiteren eine Förderanlage (7, 9, 25) umfaßt.

11. System nach jedem der vorhergehenden Ansprüche, wobei die Förderanlage ein Förderband (25) umfaßt, welches mit einer Anzahl von Trägervorrichtungen versehen ist, welche sowohl in Längs- als auch Querrichtung befördert werden können.

12. System nach jedem der vorhergehenden Ansprüche, wobei das System des weiteren zumindest eine weitere Fertigungsanlage (3, 11, 13, 15, 17) zum Ausführen einer zusätzlichen Fertigungsstufe umfaßt, wobei die zumindest eine weitere Fertigungsanlage (3, 11, 13, 15, 17) über die Kommunikationsvorrichtung an die Prozessoreinheit (73) angekoppelt ist.

13. System nach Anspruch 12, wobei die Prozessoreinheit (73) geeignet ist, zumindest einen weiteren Parameter der zumindest einen weiteren Fertigungsanlage (3, 11, 13, 15, 17) zu berücksichtigen.

14. System nach Anspruch 12 oder 13, wobei die durch die Prozessoreinheit (73) erstellten Daten fähig sind, die zumindest eine weitere Fertigungsanlage (3, 11, 13, 15, 17) zu steuern.

15. System nach jedem der Ansprüche 12 bis 14, wobei die zumindest eine weitere Fertigungsanlage eine Kopfleistenmontageeinheit (3) ist.

16. System nach jedem der Ansprüche 12 bis 14, wobei die zumindest eine weitere Fertigungsanlage eine Lamellenfertigungs- und -montagemaschine (11, 13, 15, 17) ist.

17. System nach jedem der vorhergehenden Ansprüche, wobei der zumindest eine Parameter auch Zustandsinformation über ein einzelnes, im Bau befindliches Jalousieprodukt enthält.

18. System nach jedem der vorhergehenden Ansprüche, wobei der zumindest eine Parameter auch Identifikationsinformation über die zumindest eine Fertigungsanlage enthält.

19. System nach jedem der vorhergehenden Ansprüche, wobei der zumindest eine Parameter auch Zustandsinformation über die zumindest eine Fertigungsanlage enthält.

20. System nach jedem der vorhergehenden Ansprüche, wobei die Kommunikationsvorrichtung einen Kommunikationskanal umfaßt.

21. System nach jedem der vorhergehenden Ansprüche, wobei die Kommunikationsvorrichtung ein menschliches Interface (75) umfaßt.

22. System nach jedem der vorhergehenden Ansprüche, wobei die Kommunikationsvorrichtung einen Strichcodeleser (77) umfaßt.

23. System nach jedem der vorhergehenden Ansprüche, wobei die Kommunikationsvorrichtung einen Strichcodedrukker (79) umfaßt.

**Revendications**

1. Système pour fabriquer des stores, ledit système comportant une unité centrale (73), au moins une installation de fabrication (1) pour découper à la longueur un matériau allongé et un dispositif de communication pour échanger des données entre l'unité centrale (73) et ladite au moins une installation de fabrication (1), **caractérisé en ce que** l'unité centrale (73) génère des données pour commander l'installation de fabrication (1), en prenant en compte un dossier d'ordres et au moins un paramètre provenant de ladite au moins une installation de fabrication, ce paramètre concernant une caractéristique du matériau allongé.

2. Système selon la revendication 1, **caractérisé en ce que** l'unité centrale (73) est adaptée pour trier le dossier d'ordres.

3. Système selon la revendication 1 ou 2, **caractérisé en ce que** l'unité centrale (73) est adaptée pour optimiser le classement en séquence du dossier d'ordres.

4. Système selon la revendication 3, **caractérisé en ce que** l'unité centrale (73) est adaptée pour trier les ordres individuels du dossier d'ordres (de fabrication) de stores soumis au même dimensionnement et à la même finition que lesdits ordres, tout en optimisant ceux-ci en les classant en fonction dudit au moins un paramètre.

5. Système selon une quelconque des revendications précédentes, **caractérisé en ce que** l'unité centrale (73) est adaptée pour générer des codes d'identification uniques concernant des ordres de stores dans le dossier d'ordres.

6. Système selon la revendication 5, **caractérisé en ce que** ladite au moins une installation de fabrication (1) comporte des moyens (79) pour transporter chaque code d'identification unique vers un support de données associé à un store particulier en cours de fabrication par ladite au moins une installation de fabrication.

7. Système selon une quelconque des revendications précédentes, **caractérisé en ce que** ladite caractéristique consiste en au moins une de celles concernant la couleur et la longueur dudit matériau allongé.

8. Système selon une quelconque des revendications précédentes, **caractérisé en ce que** le matériau allongé est constitué par un profilé en rail.

9. Système selon une quelconque des revendications précédentes, **caractérisé en ce que** ladite au moins une installation de fabrication est une machine à fabriquer des rails de tête (1).

**10.** Système selon une quelconque des revendications précédentes, **caractérisé en ce que** le système comporte en outre une installation de transport (7, 9, 25).

**11.** Système selon la revendication 10, **caractérisé en ce que** l'installation de transport comporte un convoyeur (25), qui est muni d'un certain nombre de supports transportables longitudinalement de même que transversalement.

**12.** Système selon une quelconque des revendications précédentes, **caractérisé en ce que** le système comporte en outre au moins une installation supplémentaire de fabrication (3, 11, 13, 15, 17) pour effectuer une étape additionnelle de fabrication, ladite au moins une installation supplémentaire de fabrication (3, 11, 13, 15, 17) étant couplée à l'unité centrale (73) par le dispositif de communication.

**13.** Système selon la revendication 12, **caractérisé en ce que** l'unité centrale est adaptée pour prendre en compte au moins un paramètre supplémentaire provenant de ladite au moins une installation supplémentaire de fabrication (3, 11, 13, 15, 17).

**14.** Système selon la revendication 12 ou 13, **caractérisé en ce que** lesdites données générées par l'unité centrale (73) sont capables de commander ladite au moins une installation supplémentaire de fabrication (3, 11, 13, 15, 17).

**15.** Système selon une quelconque des revendications 12 à 14, **caractérisé en ce que** ladite installation supplémentaire de fabrication est une unité d'ajustement de rails de tête (3).

**16.** Système selon une quelconque des revendications 12 à 14, **caractérisé en ce que** ladite installation supplémentaire de fabrication est une machine de fabrication et d'assemblage de lames (11, 13, 15, 17).

**17.** Système selon une quelconque des revendications précédentes, **caractérisé en ce que** ledit au moins un paramètre comprend également des informations d'état concernant un store particulier en cours de fabrication.

**18.** Système selon une quelconque des revendications précédentes, **caractérisé en ce que** ledit au moins un paramètre comprend également des informations d'identification concernant ladite au moins une installation de fabrication.

**19.** Système selon une quelconque des revendications précédentes, **caractérisé en ce que** ledit au moins un paramètre comprend également des informations d'état concernant ladite au moins une installation de fabrication.

**20.** Système selon une quelconque des revendications précédentes, **caractérisé en ce que** le dispositif de communication comporte un canal de communication.

**21.** Système selon une quelconque des revendications précédentes, **caractérisé en ce que** le dispositif de communication comporte une interface humaine (75).

**22.** Système selon une quelconque des revendications précédentes, **caractérisé en ce que** le dispositif de communication comporte un lecteur de code à barres (77).

**23.** Système selon une quelconque des revendications précédentes, **caractérisé en ce que** le dispositif de communication comporte une imprimante de code à barres (79).

Fig.1.

EP 0 779 567 B1

# Fig.2.

# Fig.3.

16

Fig.4.

91

A

35

B,D

C

Fig.5A.

35

47

A

B

93

C

D

Fig.5B.

A

35

47

B

95

C

D

Fig.5C.

35

47

A

97

B

C

D

# Fig.6.

# Fig.7.

# Fig.8.

EP 0 779 567 B1

# Fig.9.

21